# EUROPEAN PATENT APPLICATION

(11) **EP 1 274 007 A1**
(43) Date of publication of application: **08.01.2003**
(21) Application number: 01410079.6
(22) Date of filing: 03.07.2001
(51) Int. Cl.: G06F 9/445, G06F 3/06

(54) **Method of performing a system boot**

(71) Applicant: Hewlett-Packard Company, Palo Alto, CA 94304 (US)
(72) Inventor: Neuman, Paul, 38640 Claix (FR)
(74) Representative: Lloyd, Richard Graham

(57) **Abstract**

A method of performing a system boot in a computer comprising a disk drive comprising at least one disks the method comprising the steps of;
initiating a system boot procedure,
rotating the at least one disk at a first rate of rotation,
reading boot data from the disk drive and
rotating the at least one disk at a second rate of rotation.

## Description

### Description of Invention

This invention relates to a method of performing a system boot in a computer comprising a disk drive, a control means for a disk drive and a disk drive provided with said control means.

### Background of the Invention

Personal computers are conventionally provided with a storage medium comprising a hard disk drive. A hard disk drive conventionally comprises a plurality of platters or disks on which data is recorded on the upper and lower surfaces. To enable data to be read from or written to the disks, the disks are spun at a substantially constant operational rate of rotation by a suitable motor. To improve the speed of data transfer and reduce latency, that is the delay in reading data from a platter, the operated rate of rotation has been increased as hard disk drives have been developed. Originally, all hard disk drives spun at 3600rpm but development has led to hard disk drives with operational rates of rotation of 15000rpm and above.

A problem with high rotational rates for hard disk drives is that the time taken to spin up the disks to the operational rate of rotation is greater than would be required for a lower rate of rotation. When a computer is turned on and performs a system boot, it is conventionally necessary during the system boot procedure to read from a so-called boot sector of the hard disk drive. If the hard disk drive has not yet reached its operational rate of rotation, the system boot procedure waits for the disk to reach its operational rate of rotation before continuing. This leads to an undesirable delay in the system boot procedure.

An aim of the present invention is to reduce or overcome the above problem.

### Summary of the Invention

According to a first aspect of the present invention, we provide a method of performing a system boot in a computer comprising a disk drive having at least one disk comprising the steps of initiating a system boot procedure, operating the disk drive to rotate the at least one disk at a first rate of rotation, reading boot data from the at least one disk and operating the disk drive to rotate the at least one disk at a second rate of rotation.

The method may comprise the step of completing the system boot procedure and, when the at least one disk is rotating at the second rate of rotation, commencing an operating system boot procedure.

The method may comprise the step of reading data from the disk drive at a first data rate when the at least one disk is rotating at its first rate of rotation, and reading data from the disk drive at a second data rate when the at least one disk is rotating at its second rate of rotation.

The method may comprise the step, following reading the boot data from the disk drive, of sending a signal to a disk drive control means to cause the at least one disk to rotate at its second rate of rotation.

The first rate of rotation may be slower than the second rate of rotation.

According to a second aspect of the present invention we provide a control means for a disk drive comprising at least one disk, operable on commencing operation to rotate the at least one disk at a first rate of rotation, and on receipt of a signal, to rotate the at least one disk at a second rate of rotation.

The control means may be operable to read data from the disk at a first data rate when the at least one disk is rotating at the first rate of rotation, and operable to read data at a second data rate when the at least one disk is rotating at its second rate of rotation.

According to a third aspect of the invention, we provide a disk drive comprising at least one disk and a control means according to the second aspect of the invention, wherein the at least one disk comprises a first data portion and a second data portion, wherein data to be read when the at least one disk is rotating at its first rate of rotation are stored in said first data portion, and wherein data to be read when the at least one disk is spinning at its second rate of rotation are stored in its second data portion.

### Brief Description of the Drawings

The invention will now be described by way of example only with reference to the accompanying drawings, wherein;
Figure 1 is a diagrammatic view of a computer provided with a disk drive embodying the present invention,
Figure 2 is a flow diagram showing a conventional system boot procedure,
Figure 3 is a flow diagram of a system boot procedure embodying the present invention,
Figure 4a is a time line for the system boot procedure of Figure 2 and
Figure 4b is a time line for the system boot procedure of Figure 3.

### Description of the Preferred Embodiments

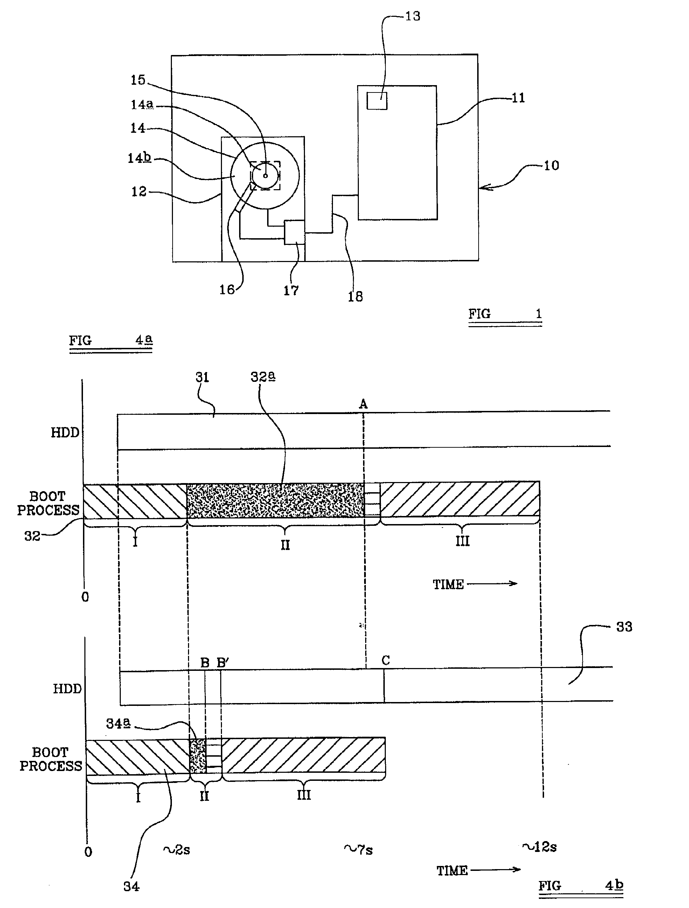

Referring to Figure 1, a computer is shown at 10, provided with a motherboard 11 and a hard disk drive 12. The motherboard 11 is provided with a system BIOS ROM 13 which is operable to perform a boot procedure to boot the computer 10 on power up or reset. The hard disk drive 12 comprises a plurality of disks or platters 14 which are rotatable by means of a spindle motor 15 and readable by a set of reading heads 16. The hard disk drive 12 is provided with a control means 17 which controls operation of the head 16 and motor 15, and is operable to transmit data read from the disks 14 via a suitable bus 18, to, for example, the motherboard 11.

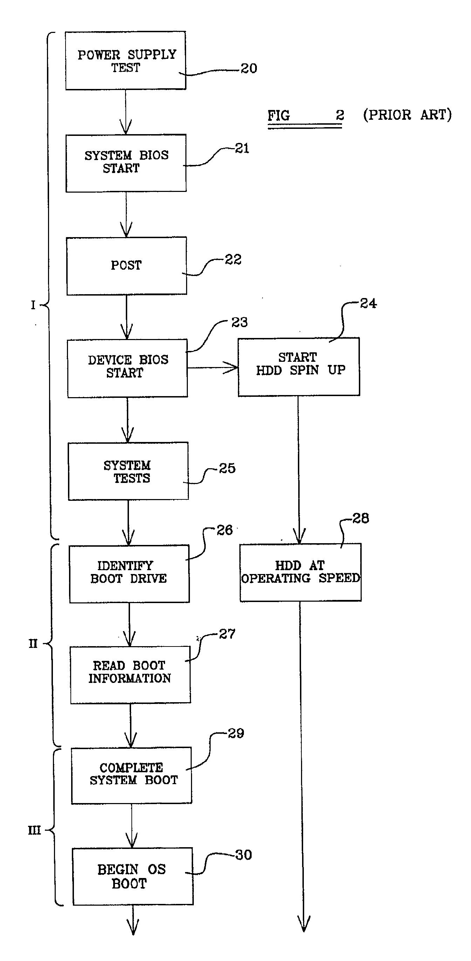

Referring to Figure 2, a conventional system boot procedure is summarised in diagrammatic form. Beginning with part I of the system boot procedure, on power up, the power supply (not shown) performs a self test until a stable power supply is established as shown at step 20. At step 21, the system BIOS ROM is initiated. At step 22, the system BIOS performs the power on self test (POST), and at step 23, the system BIOS executes various device BIOS's, including the video card BIOS (not shown) and the hard disk drive BIOS (not shown). The hard disk drive control means 17 at this point starts to spin up the plurality of disks 14 as shown at step 24. At step 25, the BIOS performs various system tests in conventional manner.

In part II of the system boot procedure, it is necessary for the system BIOS 13 to identify a drive to boot from and look for boot information. As shown in step 26, if the disks 14 of the hard disk drive 12 are not yet rotating at an operational rate, it is necessary for the system boot process to wait until the hard disk drive 12 is available. When the disks 14 of the hard disk drive 12 are rotating at an operational rate of rotation as shown at step 28, at step 26 the system BIOS 13 can identify the hard disk drive 12 as the boot drive, the system looks for a master boot record on the disks 14 and then reads the information from a boot sector. As shown in part III of the system boot procedure, the system BIOS 13 then completes the system boot procedure at step 29 and at step 30 an operating system boot procedure commences.

Referring to the timing diagram of Figure 4a, the upper bar 31 represents the time taken from power-on for the hard disk drive 12 to spin the disks 14 up to their operational rate of rotation and the lower bar 32 represents the time taken to perform parts I, II and III of the system boot procedure. Time O represents power-on of the computer 10. It will be apparent that since the disks 14 have reached the operational rate of rotation at time A, approximately 7 seconds after power on, and part I of the system boot takes only about two seconds, there is a considerable delay of about 5 seconds shown at 32a, where the system boot procedure is waiting for the disks 14 of the hard disk drive 12 to reach their operational rate of rotation.

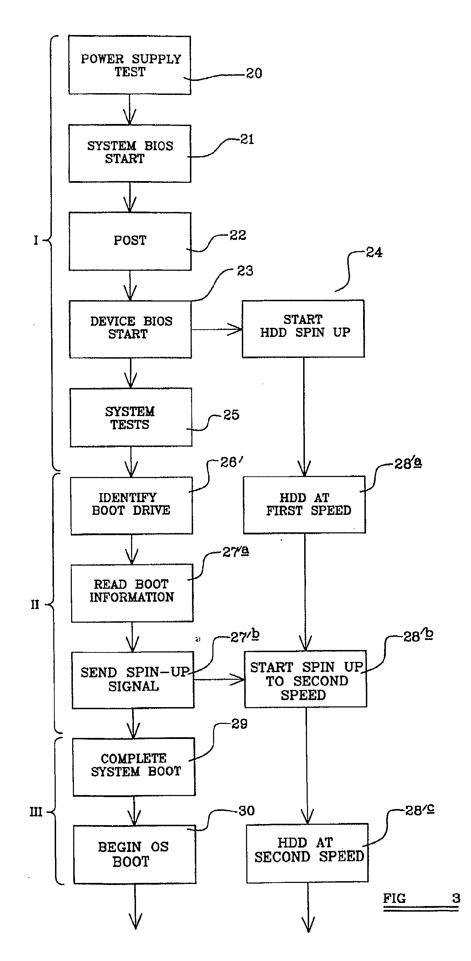

Referring now to Figures 3 and 4b, a system boot procedure embodying the present invention is diagrammatically illustrated. As will be apparent, part I of the boot procedure, that is steps 20 to 25, is exactly the same as that for the conventional boot process as shown in Figure 2. In part II of the system boot procedure however the steps of identifying the boot drive 26' and reading the boot data from the boot sector of the disks 14 of the hard disk drive 12 at step 27'a occur once the disks 14 of the hard disk drive 12 are rotating at a first operational rate of rotation as shown at step Figure 28'a. The first operational rate of rotation is preferably such that the delay between the commencement of step 26' of the system boot procedure and the disks 14 rotating at their first rate of rotation as shown at step 28'a is reduced or substantially minimised. Once the system BIOS 13 has identified the hard disk drive 12 as the boot drive, the system BIOS 13 then reads the boot sector of the disks 14 of the hard disk drive and the boot information as shown at step 27'a. Once step 27'a has been completed, then at step 27'b a signal is sent by the system BIOS 13 to the hard disk drive controller 17. As shown at step 28'b, the hard disk drive controller 17 then begins to spin the disks 14 up to a second operational rate of rotation.

In part III of the system boot procedure, the system BIOS 13 then performs steps 29 and 30 as shown in Figure 2. When the system boot procedure is completed and an operating system boot procedure begins at step 30, as shown at step 28'c the disks 14 of the hard disk drive 12 will rotating at the second, higher, operational rate of rotation such that the operating system boot procedure is able to read data from the hard disk drive 12 at a higher data rate, thus avoiding any delay to the operating system boot procedure.

Part II thus only comprises a relatively short wait period 34a which the system boot procedure waits for the disks 14 to reach the first operational rate of rotation.

As seen in the timing diagram of Figure 4b, on a bar 33 relating to the operation of the hard disk drive 12, the disks 14 reach their first rate of rotation at point B whereupon the system BIOS 13 is able to read boot information from the hard disk drive 12 very much earlier than in Figure 4a, thus reducing the length of the wait period 34a. From point B to point B', the system BIOS 13 reads the boot information from the hard disk drive 12. At point B', as shown at step 28'b in Figure 3 the hard disk drive controller 17 begins to spin the disks 14 up to a second operational rate of rotation. The system BIOS 13 is able to perform the final part, part III of the system boot procedure while the disks 14 spin up to the second operational rate of rotation in the time period B' to C. As will be apparent, the overall time for the system boot procedure is very much reduced.

Although there is a trade off in that at a lower operational rate of rotation, there will be a higher latency in obtaining data from the hard disk drive and the data may be read at a lower data rate, the quantity of information required for the system boot procedure is sufficiently small that the slightly longer period taken to read the boot information from the hard disk drive is substantially less than the time taken to wait for a hard disk drive to spin up to an operational rate of rotation in a conventional computer.

The disks 14 will store two data sets, the boot data which is to be read at the first, lower rate of rotation and all other data which is to be read at the higher second rate of rotation. Both data sets may be distributed anywhere on the disks 14 in a conventional manner. Alternatively, it may be advantageous to physically separate the two data sets on the disks 14. In the example shown in Figure 1, the hard disk is shown with a first portion 14a comprising a group of cylinders in conventional manner comprising the boot information to be read when the disk 14 is spinning at its first rate of rotation, and a second portion 14b, containing all the other data stored on the hard drive 14 which may be read at the second rate of rotation. It will be apparent that the first portion and second portion may be distributed as desired over the various disks or platters making up the hard disk 14. Advantageously, the controller 17 may comprise firmware operable to map the location of the first data portion 14a and the second data portion 14b, and which is also operable at step 24' to spin up the disks 14 to the first rate of rotation and on receiving the second signal at step 28'b to speed up the hard disks to the second rate of rotation.

Although the invention has been described with reference to a hard disk drive, it will be apparent that the invention may be applied to any similar rotating storage medium where there exists a trade-off between the time taken for the medium to be available for operation from start up, latency and rotation rate.

In the present specification "comprises" means "includes or consists of" and "comprising" means "including or consisting of'.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A method of performing a system boot in a computer comprising a disk drive comprising at least one disk, the method comprising the steps of;
initiating a system boot procedure,
rotating the at least one disk at a first rate of rotation,
reading boot data from the disk drive and
rotating the at least one disk at a second rate of rotation.

2. A method according to claim 1 comprising the further step of completing the system boot procedure and, when the at least one disk is rotating at the second rate of rotation, commencing an operating system boot procedure.

3. A method according to claim 1 or claim 2 comprising the step of reading data from the at least one disk at a first data rate when the at least one disk is rotating at its first rate of rotation, and reading data from the at least one disk at a second data rate when the at least one disk is rotating at its second rate of rotation.

4. A method according to any one of the preceding claims comprising the step, following reading the boot data from the disk drive, of sending a signal to a disk drive control means to cause the at least one disk to rotate at its second rate of rotation.

5. A method according to any one of claims 1 to 4 wherein the first rate of rotation is slower than the second rate of rotation.

6. A control means for a disk drive comprising at least one disk operable, on commencing operation, to rotate the at least one disk at a first rate of rotation, and on receipt of a signal, to rotate the at least one disk at a second rate of rotation.

7. A control means according to claim 6 operable to read data from the at least one disk at a first data rate when the at least one disk is rotating at a first rate of rotation, and operable to read data at a second data rate when the at least one disk is rotating at its second rate of rotation.

8. A disk drive comprising a control means according to claim 6 or claim 7, wherein the at least one disk comprises a first data portion and a second data portion, wherein data to be read when the at least one disk is rotating at its first rate of rotation is stored in the first data portion, and wherein data to be read when the at least one disk is rotating at its second rate of rotation is stored in the second data portion.
